# EUROPÄISCHE PATENTSCHRIFT

(11) **EP 2 023 005 B1**
(45) Veröffentlichungstag und Bekanntmachung des Hinweises auf die Patenterteilung: **23.01.2013**
(21) Anmeldenummer: 08012245.0
(22) Anmeldetag: 07.07.2008
(51) Int. Cl.: F16F 1/38

(54) **Elastisches Lager**
Elastic bearing
Support élastique

(30) Priorität: 07.08.2007 DE 102007037111
(43) Veröffentlichungstag der Anmeldung: 11.02.2009
(73) Patentinhaber: Anvis Deutschland GmbH, 36396 Steinau an der Strasse (DE)
(72) Erfinder: Hermann, Waldemar, 63637 Jossgrund (DE); Mosonyi, Zsolt, 63628 Bad Soden-Salmünster (DE); Sauer, Hermann, 63826 Geiselbach (DE); Charette, Christian, 03400 Yzeure (FR)
(74) Vertreter: Schmid, Nils T.F.

(56) Entgegenhaltungen:
- EP-A1- 0 163 980
- EP-A1- 1 505 311
- EP-A1- 1 589 251
- GB-A- 2 115 080

## Beschreibung

Die Erfindung betrifft ein elastisches Lager mit einer Innenarmatur, eine die Innenarmatur radial umgebenden Außenarmatur und einen sich dazwischen axial erstreckenden, die Innen - und Außenarmatur verbindenden Dämpfungskörper aus Elastomer, insbesondere Gummi.

Derartige elastische Lager werden häufig dort eingesetzt, wo Schwingungsbelastungen an von einem Bauteil auf ein anderes Bauteil dämpfend übertragen werden sollen und hohe radiale und axiale Belastungen sowie Torsionskräfte und/oder kardanische Kräfte auftreten.

Diese Belastungsverhältnisse liegen beispielsweise am Fahrwerk eines Kraftfahrzeugs vor, wo sogenannte Fahrwerksbuchsen eingesetzt werden, bei denen ein vorbestimmtes Verhältnis zwischen radialer Steifigkeit und der Torsionssteifigkeit gefordert wird.

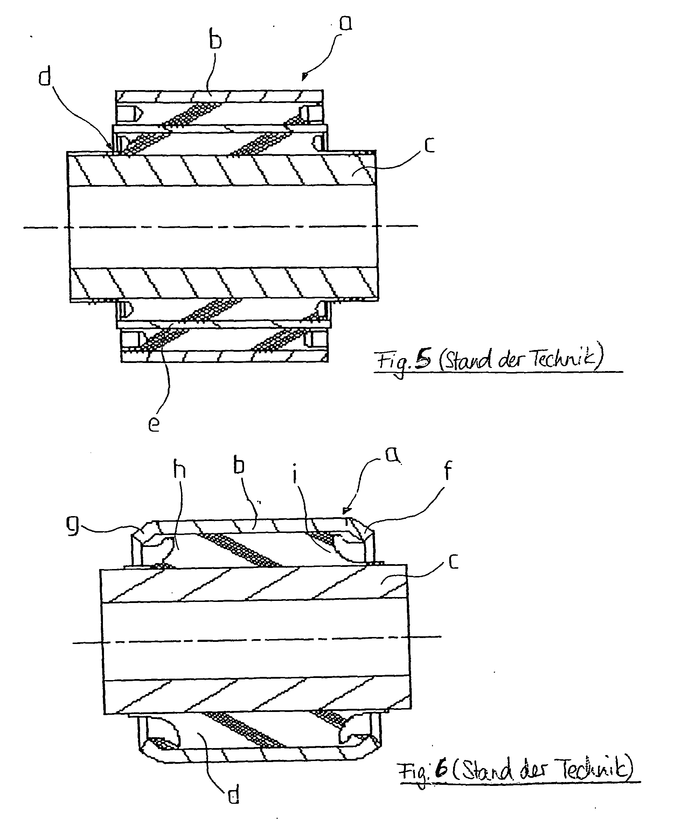

Um ein möglichst geringe Dehnung des Elastomerkörpers bei radialer Belastung des Lagers zuzulassen, ist es bekannt, zwischen der Außenarmatur und der Innenarmatur eine Zwischenarmatur einzusetzen. Ein bekanntes elastisches Lager dieser Bauart ist beispielsweise in der beiliegenden Figur 5) gezeigt, die eine Querschnittsansicht des im allgemeinen mit einem Bezugszeichen (a) versehenen elastischen Lagers entspricht. Das elastisches Lager (a) hat eine Außenbuchse (b), eine dazu stärkere Innenbuchse (c), die von der Außenbuchse (b) umgeben ist, und einen zwischen der Außenbuchse (b) und der Innenbuchse (c) liegenden Elastomerdämpfungskörper (d). Ein Zwischenring (e) ist in dem Elastomerdämpfungskörper (d) eingebettet. Das elastische Lager (a) bekannte Bauart hat sich im Einsatz bewährt, unterliegt allerdings einigen strukturellen Nachteilen insofern, als es eine relativ große radiale Abmessung aufgrund der Zwischenanordnung des Zwischenrings (e) aufweist. Des weiteren ist es aufgrund des Einsatzes der verhältnismäßigen großen Menge von Metall insbesondere für den Zwischenring relativ schwergewichtig. Schließlich ist das bekannt elastische Lager teuer in der Herstellung.

Um eine Zwischenringlösung zur Verringerung der Dehnung des elastischen Dämpfungskörpers bei radialer Belastung zu vermeiden, ist es bei einem gattungsgemäßen Lager bekannt, axiale Enden (f, g) der Außenbuchse radial nach innen umzubördeln, wie in der Querschnittansicht der Figur B) dargestellt ist. Diese Einkapselung des Dämpfungskörpers (d) durch radiale Umbördelung der axialen Enden (f, g) der Außenbuchse (b) bewirkt eine Vordruckdehnung des Elastomermaterials vor der Endmontage des elastischen Lagers (a) am Fahrwerk, was zu einem gut eingestellten Verhältnis der radialen Steifigkeit zur Torsionssteife führt. Es zeigte sich allerdings bei dem elastischen Lager (a) gemäß Figur B), daß aufgrund der Umbördelung der axialen Enden der Außenbuchse (b) und der damit einhergehenden Vordruckdehnung des Elastomerkörpers bei radialer Betriebshöchstbelastungen Spitzenspannungen und Spitzendehnungen an dessen Endbereichen (h, i) erzeugt werden, die nach Wiederholung durchaus zu einem Versagen des Elastomerdämpfungskörpers (d) führen können.

GB 2 115 080 A offenbart ein Schwenklager mit einem Schraubenbolzen, einem Lagerkörper und einer dazwischen liegenden Metallhülse. Der Lagerkörper besteht aus einer Innenhülse, an der ein Gummikörper aufvulkanisiert ist, und einer zur Innenhülse koaxialen Außenhülse. Der Gummikörper kann dabei ein Übermaß aufweisen und zwischen Innen- und Außenhülse eingepresst werden. Durch das Vorsehen einer Metallhülse zwischen dem Schraubenbolzen und dem Lagerteil können Überbelastungen des Schraubenbolzen verhindert werden und damit die Dauerfestigkeit des Schwenklagers erhöht werden.

Eine Lagerbuchse ist aus EP 1 505 311 A1 bekannt. EP 1 589 251 A1 offenbart ein Lager für ein Kraftfahrzeug.

Es ist Aufgabe der Erfindung, die Nachteile des Stands der Technik zu überwinden, insbesondere ein elastisches Lager der gattungsgemäßen Bauart mit einem verbesserten Verhältnis von radialer Steifigkeit zur Torsionssteifigkeit bereitzustellen, wobei eine ausreichende Dauerfestigkeit sichergestellt ist.

Diese Aufgabe wird durch die Merkmale von Anspruch 1 gelöst. Danach ist im Bereich wenigstens eines axialen Endes der Außen- und der Innenarmatur eine umlaufende Vertiefung in der Innenarmatur ausgebildet, wobei insbesondere der Vertiefung gegenüberliegend zumindest ein axiales Ende, vorzugsweise beide axiale Enden, der Außenarmatur etwa auf einer axialen Höhe der Vertiefung radial nach innen umgebördelt ist/sind. Aufgrund der Umbördelung nach radial innen wird der Dämpfungskörper benachbart der Umbördelung zusammengedrückt und somit radial auf Druck vorgespannt. Ein erfindungsgemäßes elastisches Lager wird gefertigt, indem die Umbördelung erst vorgenommen wird, wenn der Dämpfungskörper, insbesondere der Elastomerkörper, zwischen der Außen- und Innenarmatur eingebracht, insbesondere eingespritzt, wurde. Die Umbördelung erzeugt eine lokale Vorspannung des Dämpfungskörpers, insbesondere benachbart dem axialen Endrand des Dämpfungskörpers. Die umlaufende Vertiefung ist zumindest teilweise derart von dem Elastomer, insbesondere Gummi, des Dämpfungskörpers belegt, daß eine sich von der Vertiefung radiale erstreckende Säule auf Elastomer, insbesondere Gummi, als Teil des Dämpfungskörpers eine elastische Verbindung zwischen der Innen- und der Außenarmatur bildet.

Mit der erfindungsgemäßen Maßnahme des Ausbildens einer Vertiefung im Bereich der unter Umständen radial nach innen gebördelten axialen Enden der Außenarmatur wird einerseits der Vorteil der einkapselnden Funktion der Außenarmatur genutzt, andererseits ein Ausgleich der bereits durch die Umbördelung entstehenden Vordehnungen geschaffen. Bei weiterer radialer Belastung im Betrieb des elastischen Lagers zeigte sich, daß die Vertiefung an der Innenarmatur eine sich weit ausdehnende Verteilung der Innenspannungen über einen wesentlich größeren Bereich des Elastomerkörpers bewirkt, wodurch Spannungsspitzen im axialen Randendbereich des Elastomerdämpfungskörpers deutlich abgeschwächt werden können. Vielmehr wird aufgrund der reduzierten Spannungsbeträge in dem axialen Randbereich des Elastomerkörpers eine stärkere lokale Dehnung des Elastomermaterials verhindert, so daß eine Verformung von Elastomermaterial aus dem überdeckten Bereich der Außenarmatur auch bei hohen radialen Belastungen verhindert wird. Es zeigte sich überraschenderweise, daß mit dem Einbringen einer Vertiefung in der Innenarmatur, die von dem Elastomer, insbesondere Gummi, der Dämpfungskörper belegt ist, um eine Verbindungssäule zwischen Innen- und Außenarmatur zu bilden, eine deutlich verbesserte Dauerfestigkeit des elastischen Lagers erzielt werden konnte.

Es zeigte sich überraschenderweise, dass mit der erfindungsgemäßen Maßnahme des Einbringens einer Vertiefung, die einer Rand-Umbördelung der Außenhülse gegenüberliegt, ein verbessertes Verhältnis der Radialsteifigkeit zur Torsionssteifigkeit bereitgestellt werden kann, obwohl deutlich geringere Abmessungen für das elastische Lager verwendet werden können. Die radiale Abmessung von elastischen Lagern kann bis zu 15mm reduziert werden. Eine Zwischenblechanordnung zur Erhöhung der Radialsteifigkeit, wie es der Stand der Technik gemäß Figur 5 zeigt, ist bei dem erfindungsgemäßen elastischen Lager entbehrlich, was zu der deutlichen Reduzierung der radialen Abmessung führt.

Bei einer bevorzugten Ausführung der Erfindung ist eine radiale Stärke der wenigstens einen Dämpfungskörpersäule größer als eine radiale Dicke des restlichen Dämpfungskörpers. Mit dieser strukturellen Ausgestaltung des Dämpfungskörpers im axialen Verlauf kann eine noch bessere Verteilung der durch radiale Belastung entstehenden Innendruckspannungen innerhalb des Dämpfungskörpes erzielt werden.

Vorzugsweise ist zumindest die Dämpfungskörpersäule, vorzugsweise der gesamte Dämpfungskörper, frei von einer starren, von Elastomer oder Gummi umgebenden Zwischenarmatur, wodurch eine elastische, direkte, durchgehende und unterbrechungsfreie Elastomermaterialverbindung zur Außenarmatur gebildet ist.

Bei einer bevorzugten Ausführung der Erfindung ist die Dämpfungskörpersäule ein Teil eines aus einem Elastomerstück gefertigten, insbesondere gespritzten, Dämpfungskörper. Auf diese Weise können die Herstellungskosten bei Erhalt der erfindungsgemäßen Vorteile gering gehalten werden.

Bei einer bevorzugten Weiterbildung der Erfindung erstreckt sich die Vertiefung von dem Bereich des axialen Endes der Außen- oder der Innenarmatur hin zu einer axialen Mitte des Lagers, ohne eine radiale Mittelachse des Lagers zu kreuzen. Auf diese Weise ist ein vertiefter, begrenzter Einschnitt an der Außenseite der Innenarmatur eingebracht, wobei im Mittelbereich der Innenarmatur deren ursprüngliche unbeeinträchtigte Außenabmessung, insbesondere Außendurchmesser, bestehen bleibt.

Vorzugsweise ist die axiale Abmessung der Vertiefung kleiner als ein Drittel der axialen Abmessung der Innen- oder Außenarmatur, insbesondere der kürzeren von beiden. Dabei kann die axiale Abmessung der Vertiefung dem Fünffachen einer radialen Stärke der Dämpfungskörpersäule entsprechen. Vorzugsweise ist die axiale Abmessung der Vertiefung 1 mm bis 30 mm, vorzugsweise 10 mm, breit.

Bei einer Weiterbildung der Erfindung ist jeweils eine Vertiefung im Bereich beider axialen Enden der Außen- oder Innenarmatur vorgesehen. Beide Vertiefungen sind durch einen vertiefungsfreien Innenarmatur-Zwischenabschnitt größerer Außenabmessung getrennt. Vorzugsweise ist der zwischen zwei Vertiefungen liegende Innenarmatur-Zwischenabschnitt insbesondere ideal zylindrisch. Der Innenarmatur-Zwischenabschnitt erstreckt sich von den sich zugewandten umlaufenden Vertiefungsrändern der Vertiefungen.

Bei einer bevorzugten Ausführung der Erfindung ist die Vertiefung eine Nut oder ein Einstich in der Innenarmatur mit einer radialen Tiefe von 0,05 mm bis 10 mm, vorzugsweise 0,5 mm, ausgebildet. Dabei kann die Nut einen flachen, sich im wesentlichen nur axial erstreckenden Boden aufweisen, von dem sich beidseitig runde Nutränder zur nutfreien Außenseite größerer Außenabmessung der Innenarmatur erstrecken.

Bei einer bevorzugten Ausführung der Erfindung hat der Dämpfungskörper im Querschnitt zwei einander zugewandte U-Formen kurzer Schenkel. Die U-Schenkel sind deutlich kürzer als der die U-Schenkel verbindende U-Steg.

Bei einer bevorzugten Ausführung der Erfindung ist dem Dämpfungskörper in dem Bereich von zumindest einem dessen axialen Enden eine axiale Ausbuchtung eingebracht. Die Ausbuchtung ist von der Innenarmatur und der Außenarmatur radial umgeben. Die Ausbuchtung erstreckt sich teilweise in die Dämpfungskörpersäule. Auf diese Weise wird vermieden, daß sich bei radialer Belastung Elastomermaterial oder Gummimaterial sich aus den axialen Abmessungen der Innenarmatur und Außenarmatur heraus verformt und unter Umständen durch die scharfen Kanten der axialen Enden der Außen- oder Innenarmatur verletzt wird.

Bei einer bevorzugten Ausführung der Erfindung ist die Ausbuchtung mit wenigstens einem radialen Hintenschnitt versehen. Auf diese Weise kann die Verteilung der Spannung innerhalb des Elastomerkörpers verbessert werden.

Bei einer bevorzugten Ausführungsform ist im Bereich einer axialen Mitte des Lager die Außenarmatur mit einer Einschnürung versehen, so daß der Dämpfungskörper im Bereich der Einschnürung eine radiale Stärke geringerer Abmessung als im restlichen Bereich aufweist.

Mit dieser Maßnahme wurde überraschenderweise erreicht, daß die Spannungsverteilung dahingehend verbessert wird, daß zugunsten Spannungsspitzen eine gleichmäßige Verteilung der Belastungsspannung innerhalb des Elastomerkörpers insbesondere durch Erhöhung der Spannung in den ansonsten wenig belasteten Bereichen der der Mittelachse benachbarten Elastomerabschnitte erreicht wird.

Bei einer bevorzugten Ausführung der Erfindung ist die Einschnürung durch eine radial nach innen gerichtete Nase an einer Innenseite der Außenarmatur gebildet. Alternativ oder zusätzlich kann die Einschnürung durch eine radial nach innen gerichtete Formeinbuchtung betreffen die gesamte Außenarmatur gebildet sein.

Vorzugsweise ist die axiale Abmessung der Einschnürung kleiner als ein Drittel der axialen Ausdehnung der Außenarmatur. Vorzugsweise ist die axiale Abmessung der Einschnürung 1 mm bis 30 mm, vorzugsweise 10 mm, breit.

Bei einer bevorzugten Ausführung der Erfindung hat die Einschnürung eine radiale Abmessung von 0,05 mm bis 5 mm, vorzugsweise 1,0 mm.

Bei einer bevorzugten Ausführung der Erfindung ist die Innenarmatur in radialer Richtung stärker als die Außenarmatur gebildet. Dabei kann die Innen- und Außenarmatur insbesondere hohlzylindrisch ausgebildet sein, wobei die Armaturen und der hohlzylindrische Dämpfungskörper konzentrisch zueinander angeordnet sind. Vorzugsweise ist die axiale Ausdehnung der Außenarmatur kleiner oder gleich der axialen Ausdehnung der Innenarmatur. Dabei kann sich der Dämpfungskörper einstückig unterbrechungsfrei, durchgehend von einem Bereich des axialen Endes zum anderen Bereich des axialen Endes der Außenarmatur erstrecken.

Weitere Eigenschaften, Vorteil und Merkmale der Erfindung werden durch die folgende Beschreibung bevorzugter Ausführungen der Erfindung anhand der beiliegenden Zeichnungen deutlich, in denen zeigen:
- Figur 1: eine Querschnittansicht des erfindungsgemäßen elastischen Lagers in einer ersten Ausführung;
- Figur 2: eine Querschnittsansicht eines elastischen Lagers;
- Figur 3: eine Querschnittsansicht des erfindungsgemäßen elastischen Lagers in einer dritten Ausführung; und
- Figur 4: eine Querschnittsdetailansicht gemäß dem Kreisausschnitt IV gemäß Figur 3.

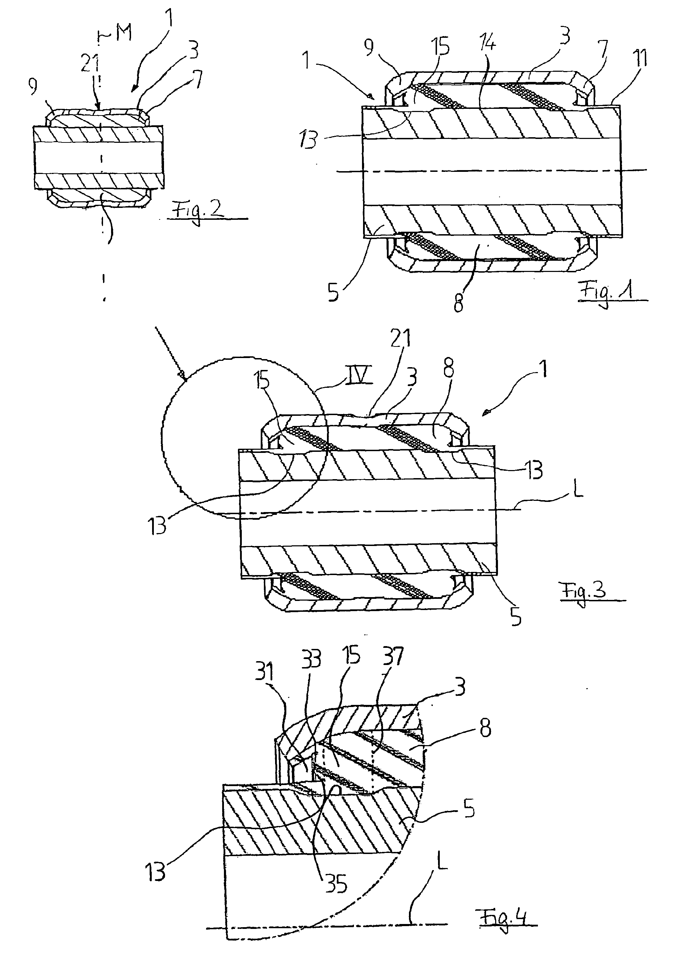

In Figur 1 ist das erfindungsgemäße elastische Lager erster Ausführung im allgemeinen mit der Bezugsziffer 1 versehen. Zur besseren Lesbarkeit der weiteren Ausführungen der Erfindung gemäß der Figuren 2 bis 4 werden für die gleichen oder ähnlichen Bauteile dieselben verwendet.

Das elastische Lager 1 gemäß Figur 1 hat eine Außenhülse 3, die konzentrisch zu einer Innenbuchse 5 größerer Stärke liegt. Die Innenbuchse 5 ist hohlzylindrisch und liegt konzentrisch zur Längsachse L.

Zwischen der Außenbuchse 3 und der Innenbuchse 5 ist ein die Außenhülse 3 mit der Innenbuchse 5 verbindender Elastomerdämpfungskörper 8 eingespritzt, der ohne jegliche Zwischenarmatur, wie einen Zwischenring, ausgebildet ist. Die axialen Enden 7, 9 der Außenhülse 3 sind radial nach innen umgebördelt, um den eingespritzen Elastomerdämpfungskörper lokal, auf axialer Höhe der Umbördelung auf Druck vorzuspannen.

Auf axialer Höhe der beiden axialen umgebogenen Enden 7, 9, jeweils den Umbördelungen radial gegenüberliegend, ist an der Außenseite 11 der Innenbuchse 5 eine durch einen Einstich oder eine Nut ausgebildete Vertiefung 13 eingebracht. Die Vertiefung 13 hat einen flachen, sich axial erstreckenden Boden und abgerundete Randbereiche, die an die Außenseite größerer Außenabmessung der Innenbuchse 5 münden.

Die Vertiefung 13 ist etwa 10 mm breit und etwa 1 mm tief in die Innenbuchse 5 eingebracht. Die Vertiefungen 13 sind jeweils axial durch radial umlaufende Begrenzungsränder begrenzt. Die sich zugewandten Begrenzungsränder der Vertiefungen 13 begrenzen axial auch einen im Wesentlichen rein zylindrischen Zwischenabschnitt 14. Der Zwischenabschnitt 14 ist vertiefungsfrei ausgebildet. Der radial zwischen dem Zwischenabschnitt 14 und der Außenarmatur 3 liegende Elastomerdämpfungskörperabschnitt 16 umfasst eine ideale rohrzylindrische Struktur. Der dem Zwischenabschnitt 14 gegenüberliegende Abschnitt der Außenarmatur 3 umfasst eine ebenso rein zylindrische Innenseite.

Mit dem Einbringen der Vertiefung 13 konnten Spannungsspitzen im axialen Randbereich 15 des Elastomerdämpfungskörpers 8 verhindert werden, weil die Vertiefung 13 eine weiter ins Innere des Elastomerkörpers 8 reichende Verteilung der Innenspannung bei radialer Belastung bewirkt.

In Figur 2 ist das elastische Lager 1 anstatt mit Vertiefungen benachbart der radial nach innen umgebogenen Enden 7, 9 mit einer radial nach innen ausgebildete Formeinbuchtung 21 im Bereich der Mittelachse M versehen, die eine Einschnürung der Außenhülse 3 im axialen Verlauf bildet.

Aufgrund dieser Einschnürung ist der Elastomerdämpfungskörper 8 auf axiale Höhe der Einschnürung mit einer geringeren radialen Stärke als der restliche Bereich des Elastomerdämpfungskörpers 8 ausgebildet.

Die allmählich hin zu einer Senke der Formeinbuchtung 21 absinkende und von der Senke allmählich ansteigende Einschnürung ist etwa 10 mm breit und reduziert die radiale Stärke des Elastomerdämpfungskörpers 8 um etwa 1 mm.

Es zeigte sich, daß mit der erfindungsgemäßen Maßnahme des Einbringens einer Einschnürung im Bereich der Außenhülse 3 eine bessere Verteilung von Spannung innerhalb des Dämpfungskörpers erreicht ist. Insbesondere in Bereichen benachbart der Mittelachse M des elastischen Lagers 1 konnten Spannungen aufgebaut werden, und zwar zu Gunsten einer deutlichen Reduzierung von Spannungsspitzen im Bereich der üblicherweise stark belasteten, axialen Endbereiche 15 des Elastomerdämpfungskörpers 8 verhindern.

In den Figuren 3 und 4 ist eine weitere Ausführung des erfindungsgemäßen elastischen Lagers 1 dargestellt, bei der die Lösungsaspekte der Ausführung gemäß den Figuren 1 und 2 kombiniert sind. Das elastische Lager 1 gemäß Figur 3 hat neben den Vertiefungen 13 auch eine Formeinbuchtung 21, wodurch eine optimale Verteilung der Spannung innerhalb des Elastomerdämpfungskörpers 8 erreicht wird.

Mit den erfindungsgemäßen Ausführungen der Figuren 1 und 3 ist ein elastisches Lager vorgeschlagen, bei dem ein optimiertes Verhältnis von radialer Steifigkeit zur Torsionssteifigkeit bzw. kardanischen Steifigkeit erreicht ist.

Wie in Figur 4 ersichtlich ist, ist im axialen Randbereich 15 des Elastomerkörpers 8 eine axiale Einbuchtung oder Aussparung 31 ausgebildet, die mit radial Hinterschnitten 33, 35 versehen sind. Mit der Einbuchtung 31 wird erreicht, daß sich bei Dehnung des axialen Randbereichs 15 kein Elastomermaterial aus dem Raum zwischen der Außenhülse 3 und der Innenbuchse buchse 5 gelangen kann. Auf diese Weise wird eine Verletzung des Elastomerdämpfungskörpers 8 aufgrund scharfer Kanten an der Außenhülse 3 vermieden.

Wie in Figur 4 weiterhin ersichtlich ist, ist die deutliche Verstärkung des Elastomerdämpfungskörpers 8 im axialen Randbereich 15 durch die Vertiefung 13 ersichtlich, wodurch eine Verbindungssäule größter radialer Abmessung gebildet ist, die durch eine gepunktet Linie 37 angedeutet ist. Es sei klar, daß die Verbindungssäule 37 ein Teil des aus einem Stück gefertigten Elastomerdämpfungskörpers 8 ist.

### Bezugszeichenliste

- a: elastisches Lager
- b: Außenbuchse
- c: Innenbuchse
- d: Elastomerdämpfungskörper
- e: Zwischenring
- f, g: axiale Enden
- h, i: axiale Endbereiche
- 1: elastisches Lager
- 3: Außenhülse
- 5: Innenbuchse
- 7, 9: axiale Enden
- 8: Elastomerdämpfungskörper
- 11: Außenseite
- 13: Vertiefung
- 14: Zwischenabschnitt
- 15: Randbereich
- 21: Formeinbuchtung
- 31: Aussparung
- 33, 35: Hinterschneidung
- 37: gepunktete Linie
- L: Längsachse
- M: Mittelachse

## Patentansprüche

1. Elastisches Lager mit einer Innenarmatur, einer die Innenarmatur radial umgebenden Außenarmatur und einem sich dazwischen axial erstreckenden, die Innen- und Außenarmatur verbindenden Dämpfungskörper aus Elastomer, insbesondere Gummi, wobei zumindest ein axiales Ende der Außenarmatur radial nach innen umgebördelt ist, so dass der Dämpfungskörper an dem umgebördelten axialen Ende bereits vor Endmontage lokal auf Druck vorgedehnt ist, **dadurch gekennzeichnet, dass** zum Ausgleich der Vordruckdehnung des Dämpfungskörpers etwa auf axialer Höhe des wenigstens eines axialen Endes (7, 9) der Außenarmatur eine umlaufende Vertiefung (13) in der Innenarmatur ausgebildet ist, welche Vertiefung (13) zumindest teilweise derart von dem Elastomer, insbesondere Gummi, des Dämpfungskörpers belegt ist, dass eine sich von der Vertiefung (13) radial erstreckende Säule (37) aus Elastomer, insbesondere Gummi, als Teil des Dämpfungskörpers eine elastische Verbindung zwischen der Innen- und der Außenarmatur bildet.

2. Elastisches Lager nach Anspruch 1, **dadurch gekennzeichnet, dass** zumindest die Dämpfungskörpersäule (37), vorzugsweise der gesamte Dämpfungskörper, frei eines starren, von Elastomer, insbesondere Gummi, umgebenden Zwischenarmatur ist und eine elastische, direkte, durchgehende Verbindung zur Außenarmatur bildet.

3. Elastisches Lager nach einem der vorstehenden Ansprüche, dadurch **gekennzeic hnet**, dass die Dämpfungskörpersäule (37) ein Teil eines aus einem Stück gefertigten, insbesondere gespritzten, Dämpfungskörpers ist.

4. Elastisches Lager nach einem der Ansprüche 1 bis 3, **dadurch gekennzeichnet, dass** die axiale Abmessung der Vertiefung (37) etwa dem Fünffachen einer radialen Stärke der Dämpfungskörpersäule (37) entspricht, vorzugsweise 1 mm bis 30 mm breit ist.

5. Elastisches Lager nach einem der Ansprüche 1 bis 4, **dadurch gekennzeichnet, dass** jeweils eine Vertiefung (13) im Bereich beider axialen Enden der Außen- oder der Innenarmatur vorgesehen ist, wobei beide Vertiefungen (13) durch einen vertiefungsfreien, insbesondere zylindrischen, Zwischenabschnitt (14) getrennt sind, der sich von den sich gegenüberliegenden Versteifungsrändern erstreckt.

6. Elastisches Lager nach einem der Ansprüche 1 bis 5, **dadurch gekennzeichnet, dass** die Vertiefung (13) eine Nut mit einer radialen Tiefe von 0,05 mm bis 10 mm, vorzugsweise von 0,1 mm bis 0,5 mm, ausgebildet ist, wobei insbesondere die Nut eine flachen, sich im wesentlichen nur axial erstreckenden Nutboden aufweist, von dem sich beidseitig runde Nutränder zur nutfreien Außenseite der Innenarmatur erstrecken.

7. Elastisches Lager nach einem der Ansprüche 1 bis 6, **dadurch gekennzeichnet, dass** der Dämpfungskörper im Bereich von zumindest einem dessen axialen Enden eine axiale Ausbuchtung (31) aufweist, die axialen von der Innenarmatur und der Außenarmatur radial umgeben ist und sich teilweise in die Dämpfungskörpersäule (37) erstreckt, wobei insbesondere die Ausbuchtung (31) wenigstens eine radiale Hinterschneidung (33, 35) aufweist.

8. Elastisches Lager nach einem der Ansprüche 1 bis 7, **dadurch gekennzeichnet, dass** im Bereich einer axialen Mitte des Lagers (1) die Außenarmatur mit einer Einschnürung versehen ist, so dass der Dämpfungskörper im Bereich der Einschnürung eine radiale Stärke geringerer Abmessung als im restlichen Bereich aufweist, wobei insbesondere die Einschnürung durch eine radial nach Innen gerichtete Nase an einer Innenseite der Außenarmatur gebildet ist, wobei insbesondere die Einschnürung durch eine radial nach Innen gerichtete Formeinbuchtung (21) der Außenarmatur gebildet ist.

9. Elastisches Lager nach Anspruch 8, **dadurch gekennzeichnet, dass** die axiale Abmessung der Einschnürung weniger als ein Drittel der Außenarmatur, vorzugsweise 1 mm bis 30 mm breit, ist.

10. Elastisches Lager, nach Anspruch 8 oder 9, **dadurch gekennzeichnet, dass** die Einschnürung eine radiale Abmessung von 0,05 mm bis 5 mm, vorzugsweise 10 mm, aufweist.

11. Elastisches Lager nach einem der Ansprüche 1 bis 10, **dadurch gekennzeichnet, dass** die Innenarmatur in Radialrichtung stärker als die Außenarmatur ausgebildet ist.

12. Elastisches Lager nach einem der Ansprüche 1 bis 11, **dadurch gekennzeichnet, dass** die Innen- und Außenarmatur insbesondere hohlzylindrische Hülsen sind, wobei die Hülsen und der insbesondere hohlzylindrische Dämpfungskörper konzentrisch zueinander angeordnet sind.

13. Elastisches Lager nach einem der Ansprüche 1 bis 12, **dadurch gekennzeichnet, dass** die axiale Ausdehnung der Außenarmatur kleiner oder gleich der axialen Ausdehnung der Innenarmatur ist, wobei insbesondere sich der Dämpfungskörper unterbrechungsfrei, durchgehend von einem Bereich des axialen Endes zum anderen Bereich des axialen Endes der Außenarmatur erstreckt.

## Claims

1. An elastic bearing with an inner sleeve, an outer sleeve that radially surrounds the inner sleeve and a damping body of elastomer, particularly rubber, that axially extends between and connects the inner and the outer sleeve, wherein at least one axial end of the outer sleeve is beaded over radially inward such that the damping body already is locally prestressed in a compressive fashion on the beaded-over axial end prior to the final assembly, **characterized in that** a circumferential recess (13) is provided in the inner sleeve at approximately the axial height of the at least one axial end (7, 9) of the outer sleeve in order to compensate the compressive prestress of the damping body, wherein said recess (13) is at least partially lined with the elastomer, particularly rubber, of the damping body in such a way that a column (37) of elastomer, particularly rubber, extending radially from the recess (13) forms an elastic connection between the inner and the outer sleeve as part of the damping body.

2. The elastic bearing according to Claim 1, **characterized in that** at least the damping body column (37), preferably the entire damping body, does not feature a rigid intermediate sleeve that is surrounded by elastomer, particularly rubber, and forms a direct, continuous elastic connection with the outer sleeve.

3. The elastic bearing according to one of the preceding claims, **characterized in that** the damping body column (37) forms part of a damping body that is manufactured, particularly extruded, in one piece.

4. The elastic bearing according to one of Claims 1 to 3, **characterized in that** the axial dimension of the recess (13) approximately corresponds to five-times the radial thickness of the damping body column (37) and preferably has a width between 1 mm and 30 mm.

5. The elastic bearing according to one of Claims 1 to 4, **characterized in that** a recess (13) is respectively provided in the region of both axial ends of the outer or the inner sleeve, wherein both recesses (13) are separated by a non-recessed intermediate section (14) that, in particular, has a cylindrical shape and extends from the opposing reinforcement edges.

6. The elastic bearing according to one of Claims 1 to 5, **characterized in that** the recess (13) is realized in the form of a groove with a radial depth between 0.05 mm and 10 mm, preferably between 0.1 mm and 0.5 mm, wherein particularly the groove has a flat groove bottom that essentially only extends axially and from both sides of which round groove edges extend to the non-grooved outer side of the inner sleeve.

7. The elastic bearing according to one of Claims 1 to 6, **characterized in that** the damping body features an axial bulge (31) in the region of at least one of its axial ends, wherein said bulge is radially surrounded by the inner sleeve and the outer sleeve and partially extends into the damping body column (37), and wherein particularly the bulge (31) features at least one radial undercut (33, 35).

8. The elastic bearing according to one of Claims 1 to 7, **characterized in that** the outer sleeve is provided with a constriction in the region of an axial centre of the bearing (1) such that the radial thickness of the damping body is smaller in the region of the constriction than in the remaining region, wherein particularly the constriction is formed by a projection on an inner side of the outer sleeve that is directed radially inward, and wherein particularly the constriction is formed by an indentation (21) of the outer sleeve that is directed radially inward.

9. The elastic bearing according to Claim 8, **characterized in that** the axial dimension of the constriction amounts to less than one-third of the outer sleeve and preferably has a width between 1 mm and 30 mm.

10. The elastic bearing according to Claim 8 or 9, **characterized in that** the constriction has a radial dimension between 0.05 mm and 5 mm, preferably 10 mm.

11. The elastic bearing according to one of Claims 1 to 10, **characterized in that** the inner sleeve is realized thicker than the outer sleeve in the radial direction.

12. The elastic bearing according to one of Claims 1 to 11, **characterized in that** the inner sleeve and the outer sleeve are realized, in particular, in the form of hollow-cylindrical sleeves, wherein the sleeves and, in particular, the hollow-cylindrical damping body are arranged concentric to one another.

13. The elastic bearing according to one of Claims 1 to 12, **characterized in that** the axial dimension of the outer sleeve is smaller than or equal to the axial dimension of the inner sleeve, wherein particularly the damping body continuously extends without interruption from one region of the axial end to the other region of the axial end of the outer sleeve.

## Revendications

1. Support élastique avec une armature interne, une armature externe entourant radialement l'armature interne et un corps amortisseur en élastomère, en particulier en caoutchouc, s'étendant axialement entre les armatures interne et externe et les reliant l'une à l'autre, au moins une extrémité axiale de l'armature externe étant limitée radialement vers l'intérieur, de sorte que le corps amortisseur est localement allongé préalablement par pression au niveau de l'extrémité axiale limitée dès avant le montage final, **caractérisé en ce que**, pour compenser l'allongement par pression préalable du corps amortisseur environ à hauteur axiale de cette au moins une extrémité axiale (7, 9) de l'armature externe, on réalise une cavité circonférentielle (13) dans l'armature interne, laquelle cavité (13) est occupée au moins partiellement par l'élastomère, en particulier du caoutchouc, du corps amortisseur, de telle sorte qu'un noyau (37) en élastomère, en particulier en caoutchouc, s'étendant radialement depuis la cavité (13) en tant que partie du corps amortisseur forme un lien élastique entre l'armature interne et l'armature externe.

2. Support élastique selon la revendication 1, **caractérisé en ce qu'**au moins le noyau du corps amortisseur (37), de préférence l'ensemble du corps amortisseur, est libre de toute armature intermédiaire périphérique rigide, en élastomère, en particulier en caoutchouc, et forme un lien élastique direct continu vers l'armature externe.

3. Support élastique selon l'une des revendications précédentes, **caractérisé en ce que** le noyau du corps amortisseur (37) est une partie d'un corps amortisseur fabriqué en une seule pièce, en particulier moulé par injection.

4. Support élastique selon l'une des revendications 1 à 3, **caractérisé en ce que** la dimension axiale de la cavité (13) correspond sensiblement à cinq fois une épaisseur radiale du noyau du corps amortisseur (37), de préférence avec une largeur de 1 mm à 30 mm.

5. Support élastique selon l'une des revendications 1 à 4, **caractérisé en ce que** l'on prévoit respectivement une cavité (13) dans la zone des deux extrémités axiales de l'armature externe ou interne, les deux cavités (13) étant séparées par une section intermédiaire (14) sans cavité, en particulier cylindrique, laquelle s'étend depuis les bords de renforcement situés en vis-à-vis.

6. Support élastique selon l'une des revendications 1 à 5, **caractérisé en ce que** la cavité (13) est une rainure réalisée avec une profondeur radiale de 0,05 mm à 10 mm, de préférence de 0,1 mm à 0,5 mm, la rainure présentant en particulier un fond de rainure plat s'étendant sensiblement seulement axialement, à partir duquel des bords de rainure ronds s'étendent des deux côtés vers le côté extérieur sans rainure de l'armature interne.

7. Support élastique selon l'une des revendications 1 à 6, **caractérisé en ce que** le corps amortisseur présente, dans la zone d'au moins l'une de ses extrémités axiales, un évidement axial (31), lequel est entouré radialement par l'armature interne et l'armature externe et s'étend partiellement dans le noyau du corps d'amortissement (37), moyennant quoi en particulier l'évidement (31) présente au moins une contre-dépouille radiale (33, 35).

8. Support élastique selon l'une des revendications 1 à 7, **caractérisé en ce que** dans la zone d'un milieu axial du support (1), l'armature externe est munie d'un rétrécissement, de sorte que le corps amortisseur présente dans la zone du rétrécissement une épaisseur radiale de dimension inférieure à celle de la zone résiduelle, le rétrécissement étant en particulier formé par un bec orienté radialement vers l'intérieur sur le côté intérieur de l'armature externe, moyennant quoi le rétrécissement est en particulier formé par une forme en retrait (21) orientée vers l'intérieur de l'armature externe.

9. Support élastique selon la revendication 8, **caractérisé en ce que** la dimension axiale du rétrécissement présente une largeur de moins d'un tiers de l'armature externe, de préférence de 1 mm à 30 mm.

10. Support élastique selon la revendication 8 ou 9, **caractérisé en ce que** le rétrécissement présente une dimension radiale de 0,05 mm à 5 mm, de préférence de 10 mm.

11. Support élastique selon l'une des revendications 1 à 10, **caractérisé en ce que** l'armature interne en direction radiale est réalisée de manière plus épaisse que l'armature externe.

12. Support élastique selon l'une des revendications 1 à 11, **caractérisé en ce que** les armatures interne et externe sont en particulier des gaines cylindriques creuses, les gaines et en particulier le corps d'amortissement cylindrique creux étant disposés de manière concentrique les uns par rapport aux autres.

13. Support élastique selon l'une des revendications 1 à 12, **caractérisé en ce que** l'étendue axiale de l'armature externe est inférieure ou égale à l'étendue axiale de l'armature interne, moyennant quoi en particulier le corps amortisseur s'étend sans interruption, d'une seule traite depuis une zone de l'extrémité axiale jusqu'à l'autre zone de l'extrémité axiale de l'armature externe.
